# EUROPEAN PATENT APPLICATION

(11) **EP 0 880 045 A1**
(43) Date of publication of application: **25.11.1998**
(21) Application number: 97108391.0
(22) Date of filing: 23.05.1997
(51) Int. Cl.: G02C 5/22

(54) **The bows of a pair of spectacles**

(71) Applicant: World Optical Co., Ltd., Yao-shi, Osaka 581 (JP)
(72) Inventor: Kanda, Kiyomi, Yao-shi, Osaka 581 (JP)
(74) Representative: Henkel, Feiler, Hänzel

(57) **Abstract**

In the present invention the bows of a pair of spectacles for being hooked on the ears are rotatable outwards in both sides and are elastic backward and forward so that the spectacles fit a face however differences there are in sizes of heads or in spaces between faces and ears. The bows A of the pair of spectacles of the present invention comprise a pair of sliding shafts 1, a pair of rotative tubes 2 and a pair of basic frames 3, wherein each of said pair of sliding shafts 1 is slidable overlapped with each of said pair of rotative tubes 2 and a slide-powering spring 8 is disposed between said sliding shaft 1 and said rotative tube 2, wherein each of said pair of rotative tubes 2 is made a square tube and the overlapping portion of each of said pair of sliding shafts 1 slipping on the inside of said rotative tube 2 is made square and wherein each of a pair of sliding shafts 4 is overlapped with each of said pair of rotative tubes 2 and a rotation powering spring 9 is disposed between said rotative tube 2 and said rotative sliding shaft 4.

## Description

### Field of the Invention

The present invention relates to an art which makes the bows of a pair of spectacles for be hung on the ears elastic so that the spectacles do not get out of place and the bows are glued to the temples and do not slip down.

### Background of the Invention

### Related Art

Conventional a pair of spectacles have their bows collapsible to be contained in a case and rotatable outwards in both sides to simplify them put on and not to press them against the temples.

And elastic bows of a pair of spectacles are disclosed in Utility Model laid Open Gazette Hei 4-33017, for example.

However, the above disclosed bows of a pair of spectacles are made so elastic as not to get the spectacles out of place or to be glued to the temples in case of use, but to be shortened in case that they are folded when they are not used.

### Summary of the Invention

The present invention, for solving such a problem that the bows of a pair of spectacles, which are long or have a long gap between, are always loose and easily slip down when the spectacles are worn, is so constructed that the bows are hooked on the ears by power of slide-powering springs and fit contact to the temples by power of rotational powering springs in case of being worn.

In the present invention, portions as a pair of sliding shafts 1 in the bows A of a pair of spectacles are made slidable in addition to rotation for widening of them. Convetionally, there is not such a construction as each of the bows A of a pair of spectacles which is divided into a sliding shaft 1 and a rotative tube 2 with a slide-powering spring 8 between, because each of said bows A which is made duplicate with said slide-powering spring 8 between needs to be so minute that it becomes large and thick.

In the present invention, the thin bows A of a pair of spectacles are made so elastic in the state of overlapping mechanism composed of sliding shafts 1 and rotative tubes 2 as to adjust their lengthes to the spaces between the face and the ears and slide-powering springs 8 are so interposed that the bows A which can be both rotatable for widening and elastic are provided with power of keeping on the temples.

### Brief Description of the Figures

Fig. 1 is a perspective view of a pair of spectacles comprising the bows A of the present invention;
Fig. 2 is a perspective view of the bows A of the present invention which are lengthened and shortened or rotated outward;
Fig. 3 is a cross-sectional plan view of the portion of a sliding shaft 1, a rotative tube 2 and a basic frame 3 of a bow A;
Fig. 4 is a cross-sectional side view of the same;
Fig. 5 is an enlarged cross-sectional plan view of the portion of a basic frame 3, a pivot 6, a rotative sliding shaft 4 and a rotative tube 2;
Fig 6 is an enlarged cross-sectional side view of the same;

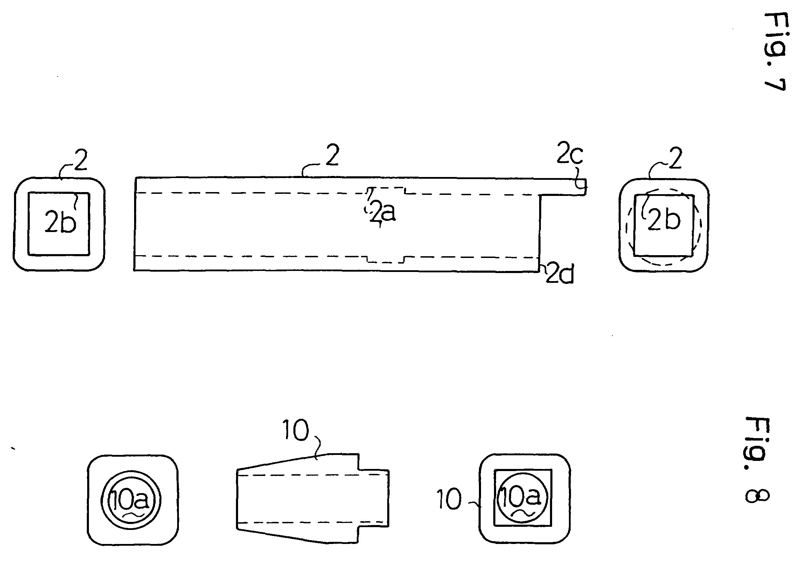

Fig. 7 are right side, front and back views of a rotative tube 2;
Fig 8, are right side, front and back views of a cap 10 which shuts the end of rotative tube 2 toward the open portion of sliding shaft 1;
Fig 9. are plan, front, back and side views of a rotative guide shaft 5 pivoted on a basic frame 3 through a pivot 6;
Fig. 10 are plan, front and side views of a basic frame 3; and
Fig. 11 is a perspective view of a sliding guide clip 7.

### Description of the Preferred Embodiment

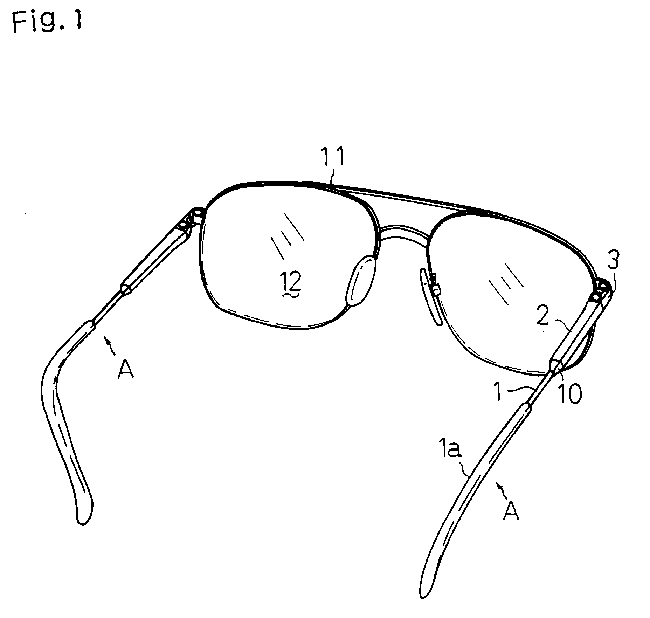

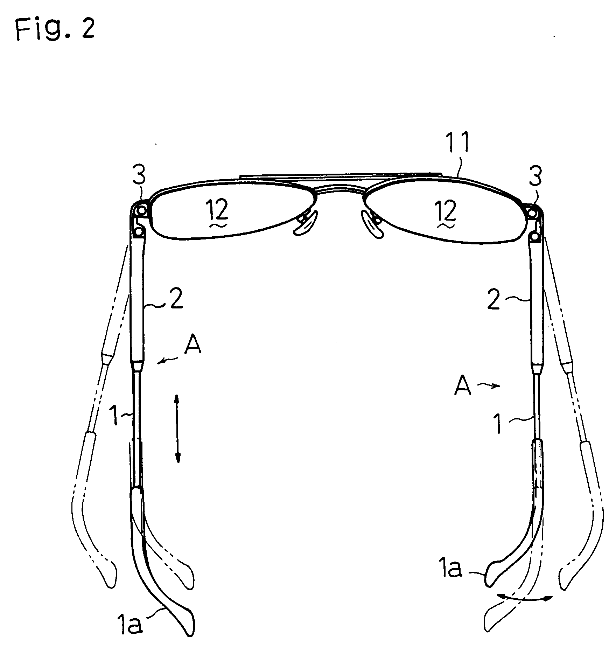

Explanation will be given on the construction of a pair of spectacles comprising the bows A in accordance with Figs. 1 and 2.

The present invention, for solving such a problem that the bows of a pair of spectacles, which are long or have long range between, are always loose and easily slip down when the spectacles are put on, is so constituted that the bows are hooked on the ears by power of slide-powering spring and fit contact to the temples by power of opening and shutting spring in case of put on.

In the present invention, portions as sliding shafts 1 in the bows A of a pair of spectacles are made elastic in addition to rotation for widening of them. Convetionally, there is not such constitution as the bows A of a pair of spectacles which are divided into sliding shafts 1 and rotative tubes 2 with slide-powering springs 8 between, because said bows A which are made duplicate with slide-powering springs 8 between need to be so minute that they become large and thick

In the present invention, the thin bows A of a pair of spectacles are made so elastic in the state of overlap composed of sliding shafts 1 and rotative tubes 2 as to adjust their length to the spaces between the face and the ears and slide-powering springs 8 are so interposed that the bows A which can be both rotatable for widening and elastic are provided with power of keeping on the temples.

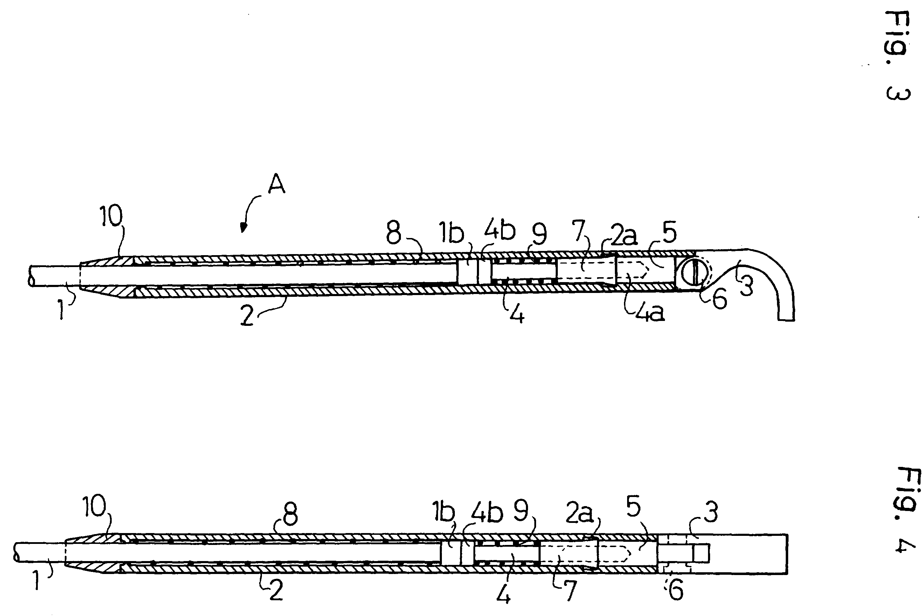

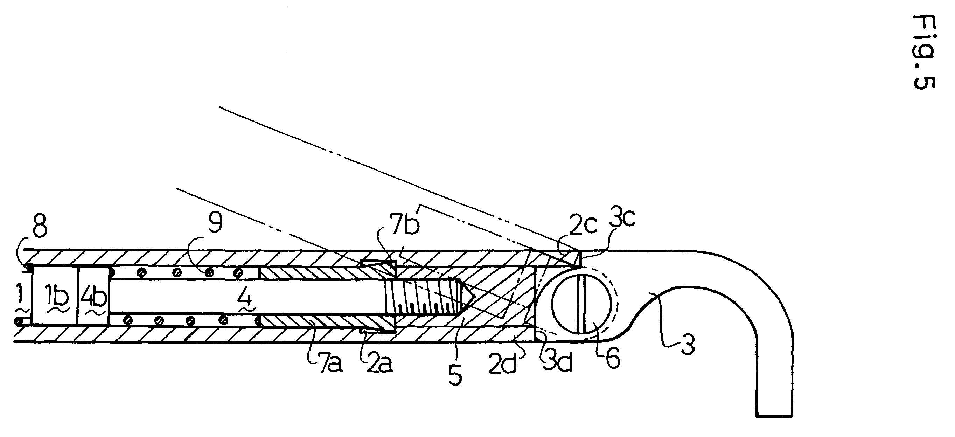

Glasses 12 are fit in a frame 11, and basic frames 3 are fixed to left and right ends of said frame 11. Each of said basic frame 3 is bent perpendicularly in arc. One end of said basic frame 3 is fixed to said frame 11 and the other end is connected with a bow A in accordance with Figs 3, 4, 5 and 6.

A pivot 6 is provided through each joint of said frame 3 and a rotative tube 2. A rotative guide shaft 5 is rotatable in connection with said basic frame 3 through said pivot 6.

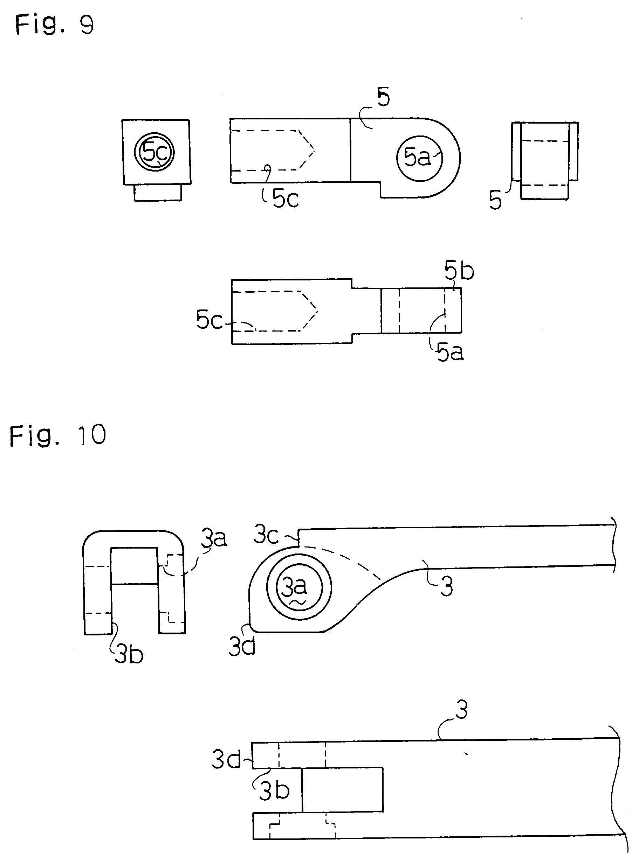

The construct of said basic frame 3 is detailed in Fig. 10. Pivot holes 3a for insertion of said pivot 6 are bored through said basic frame 3. And said basic frame 3 forms a groove 3b for insertion of said rotative guide shaft 5 U-shaped on a front view.

The construction of said rotative guide shaft 5 is detailed in Fig. 9. Said pivot 6 is inserted into a pivot hole 5a bored through one end of said rotative guide shaft 5, and an inserted part 5b formed on said rotative guide shaft 5 is inserted into said groove 3b, whereby said rotative guide shaft 5 is rotatably connected to said basic frame 3 through said pivot 6.

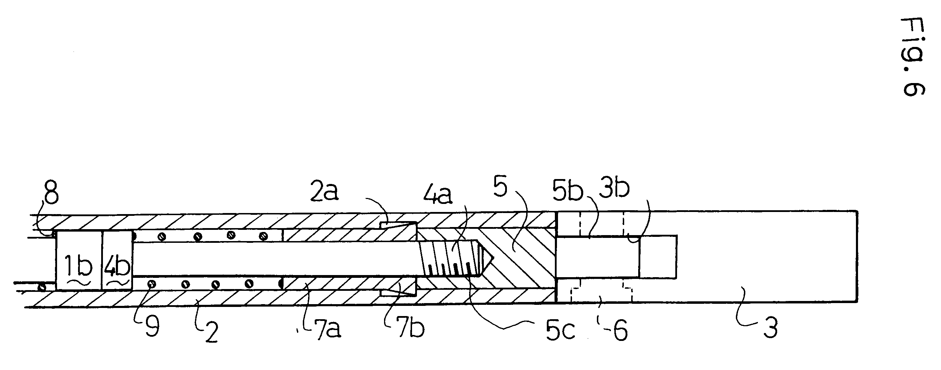

And a female screw part 5c is formed at the other end of said rotative guide shaft 5 opposite to said basic frame 3. Similarly, a male screw part 4a screwed into said female screw part 5c is formed at an end of rotative sliding shaft 4 in accordance with Figs. 5 and 6.

When said male screw part 4a is screwed into said female screw part 5c, a rotational powering spring 9 and a sliding guide clip 7 are disposed between a spring seat part 4b and said rotative guide shaft 5.

Said sliding guide clip 7 is used as a spring seat for the end toward said rotative guide shaft 5 of said rotational powering spring 9, a guide for sliding of said rotative sliding shaft 4, and a clip for holding said rotative sliding shaft 4 and a sliding shaft 1 in said rotative tube 2.

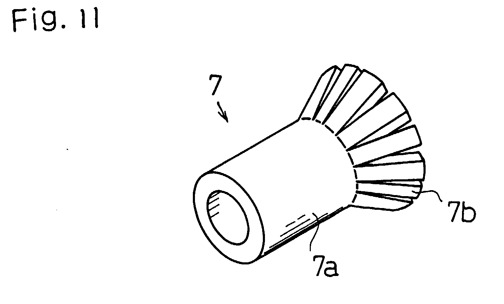

Said sliding guide clip 7 consists of a tube part 7a and a stopper part 7b in accordance with Fig. 11. In a sliding square hole 2b of said rotative tube 2, said stopper part 7b is so pressed as to be inserted in it, whereas said stopper part 7b swelles out by its elasticity while the inserted sliding guide clip 7 reaches a stopping room part 2c in said rotative tube 2, thereby said sliding guide clip 7 can not get out of said rotative tube 2.

In said rotative tube 2 is inserted a sliding shaft 1 firstly, and are said rotative sliding shaft 4 and said sliding guide clip 7 simultaneously, whereby said sliding guide shaft 7 prevents said sliding shaft 1 and said rotative sliding shaft 4 from slipping out of said rotative tube 2.

And said rotative sliding shaft 4 and said rotative guide shaft 5 are pivoted in one body to said basic frame 3 through said pivot 6. The lengthes of said rotative sliding shaft 4, said rotative guide shaft 5 and said basic frame 3 do not change, however said rotative tube 2 enclosing said rotative sliding shaft 4 and said rotative guide shaft 5 can slide by flexibility of said rotational powering spring 9.

In such a construction, when either of said rotative tubes 2 is rotated outward centering on said pivot 6, sliding of said rotative sliding shaft 4 and said rotative guide shaft 5 against power of said rotational powering spring 9 in said rotative tube 2 absorbs inconsistency which occurs between said rotative tube 2 and said rotative guide shaft 5 so much as the eccentric radius between a contact part 3c and the centered pivot 6 while a rotational central basic part 2c rotates outward in contact with said contact part 3c of basic frame 3.

When said rotative tube 2 is stopped rotating outward, the power of said rotational powering spring 9 returns said rotative sliding shaft 4, said rotative guide shaft 5 and said rotative tube 2 into their integrity, and a stopper end 2d of rotative tube 2 become so contact to a stopper end 5d of rotative guide shaft 5 and a stopper end 3d of basic frame 3 that said basic frame 3 and said rotative tube 2 are fixed into their original condition as a straight line.

Next, the condition of said sliding shaft 1 inserted into said sliding square hole 2b of rotative tube 2. Said sliding square hole 2b is formed into such a square hole that said spring seat part 4b constituting the other end of rotative sliding shaft 4 and a spring seat part 1b constituting one end of sliding shaft 1 are also squared. And a slide-powering spring 8 is disposed between said spring seat part 1b and a cap 10. When said sliding shaft 1 is pulled out, said slide-powering spring 8 is inversely so compressed as to absorb the change of length therby, said spring seat part 1b is separated from said spring seat part 4b and said sliding shaft 1 slides and extends. A hook part 1a to be hooked on an ear is joined to the other end of sliding shaft 1 by adhesives finally in construct.

Said spring seat part 1b of sliding shaft 1 and said spring seat part 4b of rotative sliding shaft 4 are so close to each other that said spring seat part 4b is also used for a stopper against the spring power of said sliding shaft 1 by said slide-powering spring 8, thereby when said rotative tube 2 is rotated outward in condition that said spring seat part 4b changes its position in said rotative tube 2 and slides toward said rotative guide shaft 5, said sliding shaft 1 also slides with its spring seat part 1b sticking to said spring seat part 4b.

Said rotative tube 2 and said cap 10 made apart from each other are united in a body by welding and so on afterwards, because said rotative tube 2 is a square tube with said sliding square hole 2b bored inside, while said cap 10 needs a round hole 10a for slidably guiding said sliding shaft 1 made from a round shaft slidablly bored inside so that if said rotative tube 2 and said cap 10 are made in a body, the process of boring such holes becomes complicated.

Said sliding shaft 1, said rotative tube 2, said rotative guide shaft 5, said slide-powering spring 8 and rotation powering spring 9, which need to be inserted in the square tube constituted by said rotative tube 2 and said cap 10 united in a body, are all inserted into the opening end of the square hole on the side toward said basic frame 3 of said rotative tube 2.

In detail, into the opening on the side toward said basic 3 of said rotative tube 2 is inserted said sliding shaft 1 as a straight shaft with said slide-powering spring 8 winded round it before said hook part 1a mounted on it, next is inserted an assembly comprising said rotative sliding shaft 4 with rotation powering spring 9 winded and said sliding guide clip 7 enclosing round it screwed in said rotative guide shaft 5 as a whole, and said sliding guide clip 7 is inserted and caught in said stopper room 2a so that the assembling of said rotative tube 2, said sliding shaft 1, said rotative sliding shaft 4 and said rotative guiding shaft 5 is over. And afterwards a hook part 1a is joined to said end of sliding shaft 1 by adhesives.

Finally, said pivot hole 5a of rotative guide shaft 5 is put in between said pivot holes 3a of basic frame 3 and said said pivot 6 is inserted in the pivot holes 3a and 5a, thereby all of assembling processes are over.

Since the present invention is so constructed as each of a pair of bows A consists of said sliding shaft 1, said rotative tube 2 and said said basic frame 3 with said sliding shaft 1 slidable by said slid-powering spring 8 interposed between said rotative tube 2 and said sliding shaft 1 as said forth, in case that each has his own spaces between his face and ears, the parts of said sliding shafts 1 can absorb the difference of sapces, whereby everybody can fit his ears to the bows A of a pair of spectacles with the spectacles prevented from getting out of position

Also, since each of rotative tubes 2 is cylindrical and each of sliding shafts 1 is overlapped with said rotative tube 2 and can slide in it, the bows A can be constructed thin and elastic prevented from becoming thick.

Also, since each of rotative tubes 2 is a square tube and the part of sliding shaft 1 which slip on the inside of rotative tube 2 is square-shaped, the axial position between each of said sliding shafts 1 and each of said rotative tubes 2 is kept, or other words, said sliding shaft 1 does not rotate on the axis of rotative tube 2, while said sliding shaft 1 is sliding.

Also, since each of bows A comprises said sliding shaft 1, said rotative tube 2 and basic frame 3, wherein said slide-powering spring 8 is interposed between said sliding shaft 1 and said rotative tube 2 overlapped with each other and wherein said rotational powering spring 9 is interposed between said rotative sliding shaft 4 and said rotative tube 2 projecting from said basic frame 3 toward said rotative tube 2 overlapped with each other, the bows A are not only elastic but also rotatable outwards in both sides, and however small the powers of slide-powering springs 8 powering said sliding springs 1 are, the powers of rotational powering springs 9 which press the bows A against the temples assist the bows A in holding them on the temples, whereby weak and thin slide-powering springs 8 can be enough to power said sliding shafts 1.

Also, since in each of said rotative tubes 2 is slidable each of said sliding shafts 1 and each of said rotative sliding shafts 4 which are overlapped with said rotative tube 2, the both mechanisms for sliding and rotation overlap with said rotative tube 2 holding them, whereby the bows A can be compact prevented from becoming thick, long and large.

Also, since each of said rotative tubes 2 is a square tube and the part of rotative sliding shaft 4 which slip on the inside of rotative tube 2 is square-shaped, the position between said sliding shafts 1 and a frame 11 can be not changed in outward rotation or elasticy of the bows A.

Also, since the ends of said sliding shaft 1 and said rotative sliding shaft 4 are close to each other in each of said rotative tubes 2 when said sliding shaft 1 is drawn back in said rotative tube 2, the ends are also used for stoppers, whereby it is not necessary to provide a stopper against said rotative tube 2 and a stopper against said sliding shaft 1.

## Claims

1. The bows of a pair of spectacles comprising: a pair of basic frames 3;
a pair of rotative tubes 2;
a pair of sliding shafts 1, wherein each of said sliding shafts 1 is slidably provided overlapped with each of said rotative tubes 2; and
a slide-powering spring 8 disposed between each of said sliding shafts 1 and each of said rotative tubes 2.

2. The bows of a pair of spectacles as set forth in claim 1,
wherein each of said rotative tube 2 which is made cylindrical contains the overlapped portion of each of said sliding shafts 1 slidably.

3. The bows of a pair of spectacles as set forth in claim 2,
wherein each of said rotative tubes 2 is made a square tube and the overlapped portion of each of said sliding shafts 1 which slips on the inside of said rotative tube 2 is made square.

4. The bows of a pair of spectacles comprising: a pair of basic frames 3;
a pair of rotative tubes 2;
a pair of sliding shafts 1, wherein each of said sliding shafts 1 is slidably provided overlapped with each of said rotative tubes 2;
a pair of slide-powering springs 8, wherein each of said slide-powering spring 8 is disposed between each of said sliding shafts 1 and each of said rotative tubes 2;
a pair of rotative sliding shafts 4, wherein each of said rotative sliding shafts 4 projects from each of said basic frame 3 toward each of said rotative tubes 2 overlapped with said rotative tube 2; and
a pair of rotation-powering spring 9, wherein each of said rotation-powering spring 9 is disposed between each of said rotative tube 2 and each of said rotative sliding shafts 4.

5. The bows of a pair of spectacles as set forth in claim 4,
wherein each of said rotative tubes 2 which is made cylindrical contains the overlapped portions of each of said sliding shafts 1 and of each of said rotative sliding shafts 4 slidably.

6. The bows of a pair of spectacles as set forth in claim 5,
wherein each of said rotative tubes 2 is made a square tube and the overlapped portions of each of said sliding shafts 1 and of each of said rotative sliding shafts 4 which slip on the inside of said rotative tube 2 are made square.

7. The bows of a pair of spectacles as set forth in claim 4,
wherein an end of each of said sliding shafts 1 and an end of said rotative sliding shafts 4 are so close to each other in the position overlapped with each of said rotative tubes 2 as stoppers in case of drawing back of said sliding shaft 1 into said rotative tube 2.
